# EUROPÄISCHE PATENTSCHRIFT

(11) **EP 0 489 947 B1**
(45) Veröffentlichungstag und Bekanntmachung des Hinweises auf die Patenterteilung: **22.03.1995**
(21) Anmeldenummer: 90123735.4
(22) Anmeldetag: 10.12.1990
(51) Int. Cl.: H02M 7/515, H02M 5/45

(54) **Löschkreis**
Turn-off circuit
Circuit d'extinction

(43) Veröffentlichungstag der Anmeldung: 17.06.1992
(73) Patentinhaber: ASEA BROWN BOVERI AG, 5400 Baden (CH)
(72) Erfinder: Steimer, Peter, CH-8165 Schleinikon (CH)

(56) Entgegenhaltungen:
- EP-A- 0 161 738
- US-A- 3 872 364
- US-A- 4 358 811

## Beschreibung

### TECHNISCHES GEBIET

Die Erfindung betrifft einen Löschkreis für eine Schaltung mit mindestens einen zwangskommutierten elektrischen Ventil.

### STAND DER TECHNIK

Die Erfindung nimmt auf einen Stand der Technik Bezug, wie er aus der US-A-4,358,811 bekannt ist. Dort ist ein Löschkreis für einen Hauptthyristor zum Ein- und Abschalten eines Laststromes angegeben, wobei ein Freilaufkreis mit 1. und 2. Freilaufdioden sowie 1. und 2. Freilaufdrosseln in einem Parallelzweig zur Last vorgesehen ist. Dabei ist die 2. Freilaufdiode und die dazu in Reihe geschaltete 2. Freilaufdrossel parallel zur 1. Freilaufdiode geschaltet. Ein Löschkreiskondensator ist in Reihenschaltung mit einem Kommutierungsthyristor und den beiden Freilaufdrosseln in einem Parallelzweig zum Hauptthyristor geschaltet. In einem Parallelzweig zu der Reihenschaltung von Löschkondensator und 2. Freilaufdrossel ist eine Reihenschaltung mit einem weiteren Thyristor und einer weiteren Drossel vorgesehen, wobei antiparallel zu diesem weiteren Thyristor ein Diode geschaltet ist. Dieser Löschkreis erfordert relativ viele Bauelemente.

Aus der EP-B1-0 161 738 ist eine Summenlöscheinrichtung bekannt, die dem Wechselrichter eines Umrichters gleichstromseitig parallelgeschaltet ist. Zum Löschen des Wechselrichters kommutiert der Laststrom auf den Löschkreis. An den Wechselrichter wird dadurch eine Gegenspannung angelegt, die den Strom durch den Wechselrichter zum Erlöschen bringt. Der Löschkreis weist eine Reihenschaltung einer Diode und eines Löschkondensators auf. In einem Parallelzweig zu dem Löschkondensator ist eine Umschwingdrossel mit einem Thyristor in Reihe geschaltet. Antiparallel zu diesem Thyristor ist eine Diode geschaltet.

Bei dieser Summenlöscheinrichtung wird die Schonzeit bzw. Mindestausschaltdauer der Wechselrichter-Thyristoren durch die Umschwingdauer der Summenlöscheinrichtung, d. h. durch die Grösse der Induktivität der Umschwingdrossel, fest eingestellt.

### DARSTELLUNG DER ERFINDUNG

Die Erfindung, wie sie im Patentanspruch 1 definiert ist, löst die Aufgabe, einen Löschkreis für eine Schaltung mit mindestens einem zwangskommutierten elektrischen Ventil der eingangs genannten Art derart weiterzuentwickeln, dass die Ausschaltdauer des mindestens einen zwangskommutierten Ventils mit einem geringeren Schaltungsaufwand variabel einstellbar wird.

Vorteilhafte Ausgestaltungen der Erfindung sind in den abhängigen Ansprüchen definiert.

Ein Vorteil der Erfindung besteht darin, dass die Umschwingdrossel viel kleiner dimensioniert werden kann, wodurch sich das Volumen des Löschkreises verringert. Die Dimensionierung des Löschkreises ist einfacher.

Der Umschwingvorgang kann nach einer Halbperiode abgebrochen werden. Nach einer frei wählbaren Zeit kann ein 2. Ventil eingeschaltet und dadurch der Vollresonanzzyklus abgeschlossen werden.

### KURZE BESCHREIBUNG DER ZEICHNUNGEN

Die Erfindung wird nachstehend anhand von Ausführungsbeispielen erläutert. Es zeigen:
- Fig. 1: ein Blockschaltbild eines Umrichters zur Speisung einer 3phasigen Wechselstrommaschine mit einem Gleichstromzwischenkreis und einem Löschkreis für einen Wechselrichter des Umrichters,
- Fig. 2: einen Umrichter gemäss Fig. 1, jedoch mit einem anderen Löschkreis für den Wechselrichter und
- Fig. 3: ein Signaldiagramm von Strömen und Spannungen zur Erläuterung der Wirkung der Löschkreise gemäss den Fig 1 und 2.

### WEGE ZUR AUSFÜHRUNG DER ERFINDUNG

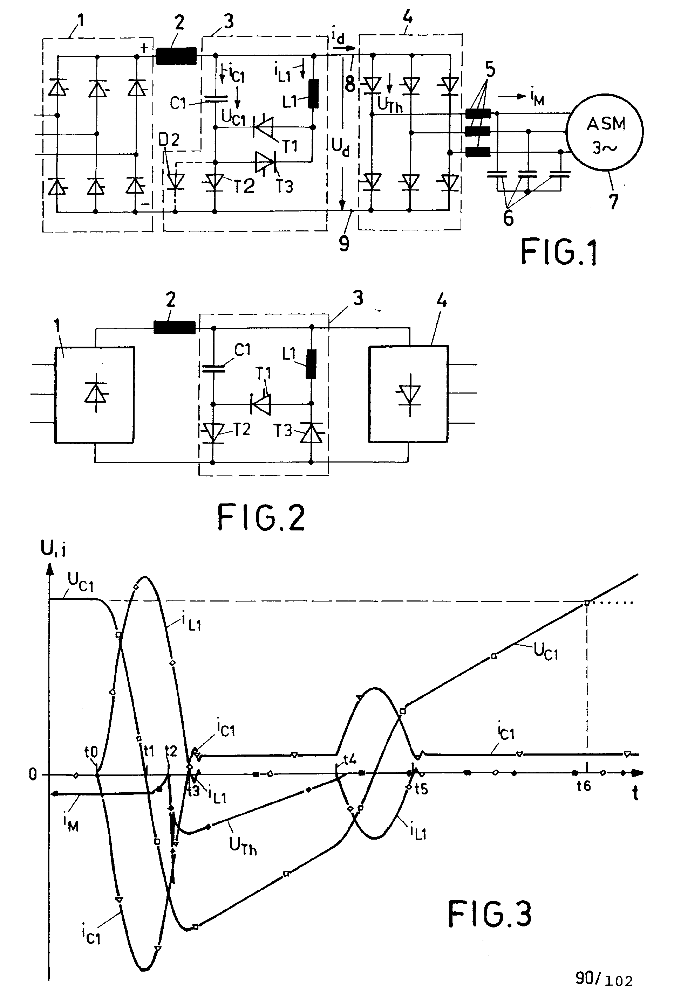

In Fig. 1 ist mit (1) ein 3phasiger Brückengleichrichter bezeichnet, der gleichstromseitig über eine Zwischenkreisdrossel (2) und einen Summenlöschkreis bzw. Löschkreis (3) mit einem Wechselrichter (4) in 3phasiger Brückenschaltung verbunden ist. Gleichrichter (1), Zwischenkreisdrossel (2), Löschkreis (3) und Wechselrichter (4) bilden zusammen einen Umrichter, der an seinem Wechselstromausgang über 3 Last- bzw. Kommutierungsdrosseln (5) und 3 Lastkondensatoren (6) in Sternschaltung zur Kompensation von Oberschwingungen mit einem Motor bzw. einer Wechselstrommaschine bzw. einer 3phasigen Asynchronmaschine (7) verbunden ist.

Das Bezugszeichen (8) bezeichnet eine positive und das Bezugszeichen (9) eine negative Anspeiseklemme des Löschkreises (3) und gleichzeitig des Wechselrichters (4), der Thyristoren in seinen Brückenzweigen aufweist.

(U_{Th}) bezeichnet eine Thyristorspannung und (i_{M}) einen Last- bzw. Motor- bzw. Maschinenstrom.

Der Löschkreis (3), der dem Wechselrichter (4) gleichstromseitig parallelgeschaltet ist, weist eine 1. Reihenschaltung aus einem Löschkondensator (C1) und einem Thyristor (T2) auf, der kathodenseitig an die negative Anspeiseklemme (9) angeschlossen ist. In einem Parallelzweig zu dem Löschkondensator (C1) ist eine Reihenschaltung aus einem induktiven Widerstand bzw. einer Umschwingdrossel (L1) und einem steuerbaren elektrischen Ventil bzw. Thyristor (T1), der kathodenseitig mit der Anode des Thyristors (T2) verbunden ist, vorgesehen. Antiparallel zu dem Thyristor (T1) ist ein Thyristor (T3) geschaltet. Anstelle des Thyristors (T2) kann, insbesondere bei einer niedrigen Zwischenkreisspannung (U_{d}), eine Diode (D2) vorgesehen sein, wie gestrichelt angedeutet.

Der vorliegende Umrichter ist z. B. für eine Zwischenkreisspannung (U_{d}) von 2,4 kV und einen Zwischenkreisstrom (i_{d}) von 840 A ausgelegt. Die Kapazität des Löschkondensators (C1) beträgt 133 »F, die Induktivität der Umschwingdrossel (L1) 0,1 mH. Ein Maschinenstrom (i_{M}) beträgt im Mittel 560 A.

Anstatt den Thyristor (T3) antiparallel zum Thyristor (T1) zu schalten, kann er auch zusammen mit dem Thyristor (T2) in einem Parallelzweig zum Thyristor (T1) geschaltet sein, wobei die Kathode des Thyristors (T2) mit der Anode des Thyristors (T3) verbunden ist, vgl. Fig. 2. Auch bei der Schaltung gemäss Fig. 2 kann anstelle des Thyristors (T2) eine Diode (D2) vorgesehen sein (nicht dargestellt) wie bei dem Ausführungsbeispiel gemäss Fig. 1.

Die gleiche Wirkung der beiden Löschkreise (3) gemäss den Fig. 1 und 2 wird nachstehend anhand von Fig. 3 erläutert. Dort sind auf der Ordinate eine Spannung (U) sowie ein Strom (i) und auf der Abszisse die Zeit (t) in willkürlichen Einheiten aufgetragen. Die dargestellten Kurven sind durch eine Computersimulation erhalten worden.

Vor einem Zeitpunkt (t0) ist der Löschkondensator (C1) auf eine Löschkondensatorspannung (U_{C1}) gleich der Zwischenkreisspannung (U_{d}) aufgeladen, ohne dass ein Kondensatorstrom (i_{C1}) fliesst. Der Wechselrichter (4) ist stromführend mit einer Thyristorspannung (U_{Th}) = 0 und einem Maschinenstrom (i_{M}) = 560 A. Im Zeitpunkt (t0) kommt von einer übergeordneten, nicht dargestellten Einrichtung ein Löschbefehl an den Löschkreis (3) zum Löschen des Wechselrichters (4). Zu diesem Zeitpunkt (t0) wird der Thyristor (T1) gezündet, so dass durch die Umschwingdrossel (L1) ein zunehmender Drosselstrom (i_{L1}) und ein bezüglich der in Fig. 1 eingezeichneten Pfeilrichtung negativer Kondensatorstrom (i_{C1}) zu fliessen beginnt, der den Löschkondensator (C1) umlädt.

Kurz nach einem Zeitpunkt (t1) der Spannungsumkehr am Löschkondensator (C1) wird der Thyristor (T2) gezündet, so dass die Thyristoren des Wechselrichters (4) einen Gegenstrom erhalten und in einem kurz danach folgenden Zeitpunkt (t2) stromlos werden. In einem späteren Zeitpunkt (t3) werden sowohl der Kondensatorstrom (i_{C1}) als auch der Drosselstrom (i_{L1}) = 0, so dass der Thyristor (T1) stromlos wird, in seinen Sperrzustand übergeht und somit den Umschwingvorgang blockiert. Danach erfolgt ein stetiges Umladen des Löschkondensators (C1) über die Zwischenkreisdrossel (2) und den stromführenden Thyristor (T2) mit einem konstanten Kondensatorstrom (i_{C1}).

Zu einem von einer übergeordneten Einrichtung vorgebbaren Zeitpunkt (t4) wird der Thyristor (T3) gezündet, mit der Bedeutung, dass der Wechselrichter (4) eingeschaltet werden soll. Danach wird bis zu einem Zeitpunkt (t5) der Umschwingvorgang des Löschkondensators (C1) beendet. Im Zeitpunkt (t5) schaltet der Thyristor (T3) infolge seines Stromnulldurchganges ab, so dass der Umschwingvorgang endet. Danach wird der Löschkondensator (C1) weiter stetig aufgeladen wie im Zeitabschnitt zwischen (t3) und (t4). Üblicherweise wird der Wechselrichter (4) zu einem Zeitpunkt (t6) wieder eingeschaltet, so dass die Kondensatorspannung (U_{C1}) nicht mehr ansteigen kann und auf dem Wert vor dem Zeitpunkt (t0) stehenbleibt, wie es gepunktet angedeutet ist.

Es versteht sich, dass der Umrichter (2 - 4) statt 6pulsig auch z. B. 12pulsig ausgeführt sein kann. Statt eines Löschkondensators (C1) kann eine Kondensatorbank vorgesehen sein. Bei entsprechend hoher Zwischenkreisspannung können mehrere Kondensatoren und Ventile in Reihe geschaltet sein.

## Patentansprüche

1. Löschkreis für eine Schaltung mit mindestens einem zwangskommutierten elektrischen Ventil, der über mindestens eine Drossel (2) an eine Geichspannungsquelle (1) angeschlossen ist,
a) welcher Löschkreis eine 1. Reihenschaltung mindestens eines Löschkondensators (C1) und mindestens eines 1. elektrischen Ventils (T2, D2) aufweist,
b) wobei in einem Parallelzweig zu dem mindestens einen Löschkondensator (C1) eine 2. Reihenschaltung mindestens eines induktiven Widerstandes (L1) mit einem steuerbaren 2. elektrischen Ventil (T1) vorgesehen ist, dessen negative Potentialseite mit der Anode des mindestens einen 1. elektrischen Ventils (T2, D2) in Wirkverbindung steht,
c) wobei in einem Parallelzweig zu dem 2. elektrischen Ventil (T1) ein steuerbares 3. elektrisches Ventil (T3) vorgesehen ist, das kathodenseitig mit der Anode des steuerbaren 2. elektrischen Ventils (T1) in Wirkverbindung steht, wobei
d) diese 1. Reihenschaltung unmittelbar parallel zu dem mindestens einen zwangskommutierten elektrischen Ventil (4) und
e) über die mindestens eine Drossel (2) unmittelbar parallel zu der Gleichspannungsquelle (1) geschaltet ist.

2. Löschkreis nach Anspruch 1, dadurch gekennzeichnet, dass das 3. elektrische Ventil (T3) antiparallel zu dem steuerbaren 2. elektrischen Ventil (T1) geschaltet ist.

3. Löschkreis nach Anspruch 1, dadurch gekennzeichnet, dass das 3. elektrische Ventil (T3) in Reihe mit dem 1. elektrischen Ventil (T2, D2) geschaltet ist, derart, dass die Kathode des 1. elektrischen Ventils (T2, D2) mit der Anode des 3. elektrischen Ventils (T3) in Wirkverbindung steht.

4. Löschkreis nach einem der Ansprüche 1 bis 3, dadurch gekennzeichnet, dass die 1. - 3. elektrischen Ventile (T2, T1, T3) Thyristoren sind.

5. Löschkreis nach einem der Ansprüche 1 bis 3, dadurch gekennzeichnet, dass das 1. elektrische Ventil eine Diode (D2) ist und dass die 2. und 3. elektrischen Ventile Thyristoren (T1, T3) sind.

## Claims

1. Turn-off circuit for a circuit having at least one self-commutated electrical valve which is connected to a DC voltage source (1) via at least one reactor (2),
a) which turn-off circuit exhibits a first series circuit of at least one turn-off capacitor (C1) and at least one first electrical valve (T2, D2),
b) in which arrangement a second series circuit of at least one inductive resistance (L1) with a controllable second electrical valve (T1) is provided in a branch in parallel with the at least one turn-off capacitor (C1), the negative potential side of which second electrical valve is operatively connected to the anode of the at least one first electrical valve (T2, D2),
c) in which arrangement a controllable third electrical valve (T3) is provided in a branch in parallel with the second electrical valve (T1), which third electrical valve is operatively connected on the cathode side to the anode of the controllable second electrical valve (T1),
d) this first series circuit being connected directly in parallel with the at least one self-commutated electrical valve (4) and
e) being connected directly in parallel with the DC voltage source (1) via the at least one reactor (2).

2. Turn-off circuit according to Claim 1, characterized in that the third electrical valve (T3) is connected in antiparallel to the controllable second electrical valve (T1).

3. Turn-off circuit according to Claim 1, characterized in that the third electrical valve (T3) is connected in series with the first electrical valve (T2, D2), in such a manner that the cathode of the first electrical valve (T2, D2) is operatively connected to the cathode of the third electrical valve (T3).

4. Turn-off circuit according to one of Claims 1 to 3, characterized in that the first to third electrical valves (T2, T1, T3) are thyristors.

5. Turn-off circuit according to one of Claims 1 to 3, characterized in that the first electrical valve is a diode (D2) and in that the second and third electrical valves are thyristors (T1, T3).

## Revendications

1. Circuit de remise à zéro pour un branchement avec au moins une soupape électrique à commutation forcée qui est raccordée par l'intermédiaire d'au moins une bobine de self (2) à une source de tension continue (1),
a) lequel circuit de remise à zéro présente un premier branchement en série d'au moins un condensateur de remise à zéro (C1) et d'au moins une première soupape électrique (T2, D2),
b) dans une dérivation en parallèle avec au moins un condensateur de remise à zéro (C1), un deuxième branchement en série d'au moins une résistance inductive (L1) est prévu avec une deuxième soupape (T1) pouvant être commandée électriquement, dont le côté du potentiel négatif se trouve en liaison active avec l'anode d'au moins une première soupape électrique (T2, D2),
c) dans une dérivation en parallèle à la deuxième soupape électrique (T1) étant prévue une troisième soupape pouvant être commandée électriquement (T3), qui se trouve en liaison active côté cathode avec l'anode de la deuxième soupape pouvant être commandée électriquement (T1),
d) ce premier branchement en série étant branché immédiatement en parallèle à au moins une soupape électrique à commutation forcée (4) et
e) étant branché par l'intermédiaire d'au moins une bobine de self (2), immédiatement en parallèle à la source de tension continue (1).

2. Circuit de remise à zéro selon la revendication 1, caractérisé par le fait que la troisième soupape électrique (T3) est branchée antiparallèlement à la deuxième soupape pouvant être commandée électriquement (T1).

3. Circuit de remise à zéro selon la revendication 1, caractérisé par le fait que la troisième soupape électrique (T3) est branchée en série avec la première soupape électrique (T2, D2), de façon telle que la cathode de la première soupape électrique (T2, D2) se trouve en liaison active avec l'anode de la troisième soupape électrique (T3).

4. Circuit de remise à zéro selon l'une quelconque des revendications 1 à 3, caractérisé par le fait que les première - troisième soupapes électriques (T2, T1, T3) sont des thyristors.

5. Circuit de remise à zéro selon l'une quelconque des revendications 1 à 3, caractérisé par le fait que la première soupape électrique est une diode (D2) et que les deuxième et troisième soupapes électriques sont des thyristors (T1, T3).
